# EUROPÄISCHE PATENTSCHRIFT

(11) **EP 3 740 672 B1**
(45) Veröffentlichungstag und Bekanntmachung des Hinweises auf die Patenterteilung: **01.01.2025**
(21) Anmeldenummer: 19700793.3
(22) Anmeldetag: 15.01.2019
(51) Int. Cl.: F03D 7/02, F03D 1/06, H02K 7/102, H02K 7/18, F03D 15/20

(54) **WINDENERGIEANLAGE MIT EINER BREMS- UND ARRETIERVORRICHTUNG, STANDBAUGRUPPE FÜR SELBIGE, UND VERFAHREN ZU DEREN BETRIEB**
WIND TURBINE HAVING A BRAKING AND ARRESTING DEVICE, STATIC ASSEMBLY FOR SAME, AND METHOD FOR OPERATING SAME
ÉOLIENNE MUNIE D'UN DISPOSITIF DE FREINAGE ET D'ARRÊT, BLOC SUPPORT POUR LADITE ÉOLIENNE, ET PROCÉDÉ PERMETTANT SON FONCTIONNEMENT

(30) Priorität: 16.01.2018 DE 102018100864
(43) Veröffentlichungstag der Anmeldung: 25.11.2020
(73) Patentinhaber: Wobben Properties GmbH, 26607 Aurich (DE)
(72) Erfinder: OBERINGER, Oliver, 66453 Gersheim (DE)
(74) Vertreter: Eisenführ Speiser
(86) Internationale Anmeldenummer: PCT/EP2019/050856
(87) Internationale Veröffentlichungsnummer: WO 2019/141643

(56) Entgegenhaltungen:
- EP-A1- 1 925 820
- EP-A1- 2 479 428
- WO-A1-2014/032826
- WO-A2-2013/092502
- WO-A2-2014/016806
- ES-A1- 2 369 810
- ES-B1- 2 369 810

## Beschreibung

Die Erfindung betrifft eine Windenergieanlage mit einer Standbaugruppe, welche einen Maschinenträger, vorzugsweise einen mit dem Maschinenträger verbundenen Achszapfen, eine Rotornabe, welche drehbar an der Standbaugruppe, insbesondere an dem Maschinenträger bzw. Achszapfen gelagert ist, einen Generator, welcher mit der Rotornabe wirkverbunden ist und eine Brems- und Arretiervorrichtung aufweist, wobei die Brems- und Arretiervorrichtung mindestens einen Bremskörper und mindestens einen Aktuator aufweist, welche dazu eingerichtet sind, den Bremskörper relativ zu einer Bremsfläche hin und her zu bewegen.

Windenergieanlagen sind allgemein bekannt. Sie werden genutzt, um Windenergie mittels Rotorblättern aufzunehmen und mittels des Generators in elektrische Energie zu wandeln. Der Generator umfasst dabei einen Generatorstator, welcher mit der Standbaugruppe verbunden ist, und einen Generatorrotor. Dabei wird die Rotation des Rotors mittels der Rotornabe auf den Generatorrotor übertragen.

Aus Sicherheitsgründen muss die Möglichkeit bestehen, beispielsweise den Rotor für Wartungs- und Servicearbeiten an einer Windenergieanlage mittels einer Bremsvorrichtung abzubremsen und gegebenenfalls mittels einer Arretiervorrichtung ausfallsicher in einer Position fixieren zu können.

Zur Arretierung des Rotors werden derzeit Verriegelungssysteme verwendet, welche einen Formschluss zwischen jeweils wenigstens einer Komponente der Standbaugruppe und der Rotationsbaugruppe oder zwischen jeweils einer mit der Standbaugruppe gekoppelten und einer mit der Rotationsbaugruppe gekoppelt Komponente erzeugen. Ein solches Verriegelungssystem erfordert eine präzise Ausrichtung, da ansonsten schwere Schäden am Verriegelungssystem oder einen mit dem Verriegelungssystem gekoppelten Bauteil entstehen.

Bekannte mechanische Bremsvorrichtungen, die neben aerodynamischen Bremsverfahren zum Einsatz kommen, wirken direkt auf den Generatorrotor oder eine mit dem Generatorrotor wirkverbundene Bremsscheibe, wodurch in Extremsituationen unerwünschte Wärmeentwicklung am Generatorrotor auftreten kann

Bremsvorrichtungen, welche nach dem Prinzip einer Trommelbremse den Rotor mittels eines Reibkontaktes zwischen Generatorrotor und Stator oder Bremsklötzen, welche am Stator befestigt sind, bremsen, führen zumeist zu einer erhöhten mechanischen Belastung des Generators. Folglich führen diese Bremsvorrichtungen, neben einem erhöhten Verschleiß des Generators und damit zu einem erhöhten Wartungsaufwand, auch zu einem erhöhten Gewicht der rotierenden Teile der Windenergieanlage und damit zu einer geringeren Leistungsfähigkeit.

Die EP 2 333 325 A1 offenbart eine Bremsvorrichtung für Windenergieanlagen mit einem Generator mit Außenläufer, welche durch einen Reibkontakt zwischen dem außen verlaufenden Generatorrotor und dem Stator, die mit den Rotorblättern verbundene Rotornabe bremst. Der Generatorrotor umfasst dabei eine Bremsscheibe, welche an einer zylindrischen Stützstruktur befestigt werden kann, und der Stator weist eine entsprechende Reibfläche auf.

Die EP 2 669 510 A1 offenbart eine ähnliche Bremsvorrichtung für Windenergieanlagen, bei welcher das Bremsen der Rotornabe durch einen Reibkontakt zwischen Generatorrotor und Stator erfolgt, bei welchem der Stator eine Bremsscheibe und der Generatorrotor eine zugehörige Reibfläche aufweist.

Bremsvorrichtungen mit Scheibenbremsen bestehen üblicherweise aus mindestens einem Bremssattel mit einem Bremsbelag, wobei der Bremssattel eine Bremsscheibe umfasst, und der Bremsbelag gegen die Bremsscheibe gedrückt werden kann, um diese in ihrer Bewegung bremst. Entsprechende Bremsvorrichtungen erfordern zumeist neben einem

### Geänderte Beschreibunqsseiten (Reinschrift)

Bremskörper oder Bremssattel eine entsprechend große Bremsscheibe, welche Bauraum erfordert und zu einem erhöhten Gewicht der Windenergieanlage führen kann. Scheibenbremsen haben außerdem den Nachteil, dass sie durch den exzentrischen Angriff der Bremsbacken an der Scheibe, neben der das Bremsmoment aufbauenden Torsionskraft, auch eine Querkraft auf das zu bremsende Element der Rotationsbaugruppe ausüben, die zu einer unerwünschten Biegebeanspruchung führt. Alternative Ausführungsformen sehen beispielsweise Bremskeile vor, welche einen Bremsbelag aufweisen, der gegen eine Bremsscheibe bewegt wird. Diese führen in der Regel bei einem geringeren Kraftaufwand zu einer vergleichbaren bzw. höheren Bremswirkung im Vergleich zu Scheibenbremsen. Auch die Verwendung der Bremskeile kann allerdings die eingangs beschriebenen Probleme, welche durch den Einsatz einer separaten Bremsscheibe hervorgerufen werden, nicht lösen.

Die EP 2 479 428 A1 offenbart eine Windturbine mit einer Brems- und Arretiervorrichtung, welche eine entlang einer Keilschräge verschiebbaren, axial wirkenden Scheibenbremsenkörper umfasst. Die Brems- und Arretiervorrichtung ist dabei am Getriebekasten befestigt und bremst eine Bremsscheibe, welche auf einer Getriebewelle gelagert ist. Eine alternative Ausführungsform sieht einen Bremssattel vor, welcher einen zweiten Bremsbelag auf die zweite Seite der Bremsscheibe drückt.

Die aus dem Stand der Technik bekannten Bremssysteme, welche durch Reibkontakt zwischen Generatorrotor und Stator den Rotor bremsen, sind nur für ein sehr stabiles und damit schweres Statorgehäuse bzw. Rotorgehäuse und/oder bestimmte Getriebe-Bauformen anwendbar, nicht aber für getriebelose Windenergieanlagen. Die Verwendung von Bremsscheiben, welche durch Reibkontakt mit mindestens einem Bremsbelag den Rotor bremsen, erfordert zusätzlichen Bauraum und führt zu einem erhöhten Gesamtgewicht der Windenergieanlage. Zweiteilige Systeme, bestehend aus einer mechanisch wirkenden Bremse und einer durch Formschluss wirkenden Arretierung benötigen zusätzlichen Bauraum und führen zwangsläufig zu einem erhöhten Gewicht der Gondel.

Ferner sind aus WO 2014/016806 A2, WO 2013/092502 A2 oder ES 2 369 810 A1 Brems- oder Anhaltevorrichtungen bekannt, welche mit an der Rotornabe ausgebildeten oder angeordneten Bremsscheiben zusammenwirkende Bremsmittel oder in Ausnehmungen an der Rotornabe eingreifende Arretierräder aufweisen.

Aufgabe der Erfindung ist es folglich, bei einer Windenergieanlage der eingangs beschriebenen Art, die im Stand der Technik vorgefundenen Nachteile möglichst weitgehend zu überwinden. Der Erfindung lag insbesondere die Aufgabe zu Grunde, eine Windenergieanlage mit einer Brems- und Arretiervorrichtung vorzusehen, welche die Rotornabe bei möglichst geringer Beanspruchung des Generators bremsen kann.

Die Erfindung löst die zu Grunde liegende Aufgabe, indem sie eine Windenergieanlage mit den Merkmalen von Anspruch 1 vorschlägt. Insbesondere schlägt die Erfindung vor, dass die Brems-und/oder Arretiervorrichtung an der Standbaugruppe, insbesondere an dem Achszapfen befestigt ist und die Bremsfläche an der Rotornabe ausgebildet ist.

Der Achszapfen der Windenergieanlage kann dabei einteilig oder mehrteilig ausgebildet sein.

Durch die Befestigung der Brems-und Arretiervorrichtung an der Standbaugrube, insbesondere dem Achszapfen, schlägt die erfindungsgemäße Windenergieanlage eine Anordnung vor, welche durch die räumliche Nähe der rotierenden Rotornabe zu dem Achszapfen, welcher in radialer Richtung fest gelagerten ist, den erforderlichen Bauraum der Gondel reduziert. Die Erfindung macht sich darüber hinaus die Erkenntnis zu Nutze, dass das direkte Bremsen der Rotornabe einen Verzicht auf Hilfselemente, wie etwa Bremsscheiben, ermöglicht, was das Gewicht der Gondel reduziert. Zu diesem Zweck ist vorzugsweise an der Rotornabe eine Bremsfläche ausgebildet, welche mit dem Bremskörper in Reibkontakt tritt. Der Reibkontakt entsteht dabei insbesondere zwischen der mindestens einen Wirkfläche des Bremskörpers und der Bremsfläche der Rotornabe. Die Bremsfläche ist vorzugsweise an der Innenseite der Rotornabe, insbesondere rotationssymmetrisch um deren Rotationsachse, in einem durch den Achszapfen, den Generator und die Rotornabe eingeschlossenen Zwischenraum, ausgebildet. Die Rotornabe eignet sich dabei durch ihre massive Bauweise bevorzugt zur Ausbildung der Bremsfläche.

Der Achszapfen der Windenergieanlage kann dabei einteilig oder mehrteilig ausgebildet sein. Unter der Brems- und Arretiervorrichtung wird erfindungsgemäß eine Vorrichtung verstanden, welche durch Reibkontakt eines Bremskörpers, bzw. der Wirkfläche eines Bremskörpers mit einer korrespondierenden Bremsfläche, den Rotor einer Windenergieanlage bremst, bestenfalls bis zum Stillstand, und insbesondere in dieser Position arretiert.

Die Funktionen des Bremsens und der Arretierung der Brems -und Arretiervorrichtung müssen nicht zwingend beide ausgeübt werden. Wird der Rotor beispielsweise aerodynamisch bis auf den Stillstand abgebremst, kann der Rotor mittels der Brems-und Arretiervorrichtung durch Reibschluss in dieser Position gehalten werden, indem ein Arretierungsmoment aufgebracht wird. Ebenso kann das Bremsen durch die Brems-und Arretiervorrichtung erfolgen und die anschließende Arretierung durch eine dedizierte Arretiervorrichtung, beispielsweise mittels Verbolzung, erfolgen.

Der Bremskörper weist erfindungsgemäß eine dem Achszapfen zugewandte Fläche auf, im Folgenden als Führungsfläche bezeichnet, und ist bewegbar auf dem Achszapfen gelagert. Unter der Bewegung des Bremskörpers hin und her relativ zu der Bremsfläche wird verstanden, dass der Bremskörper aus einer Ruheposition in eine Brems- und in eine Arretierungsposition und zurück in die Ruheposition bewegbar ist. Die Ruheposition beschreibt hier eine Position des Bremskörpers, in welcher der Bremskörper beabstandet zu der korrespondierenden Bremsfläche ist und in welcher keine Kraftübertragung zwischen Bremskörper und Bremsfläche stattfindet. Die Bremsposition beschreibt eine Position des Bremskörpers, in welcher er in Reibkontakt mit der korrespondierenden Bremsfläche steht und mit einer Bremskraft beaufschlagt wird. Die Arretierungsposition beschreibt eine Position, in welcher der Bremskörper in Reibkontakt mit der Bremsfläche steht und mit einer, ggf. von der Bremskraft abweichenden, Arretierungskraft beaufschlagt wird.

In einer bevorzugten Ausführungsform der erfindungsgemäßen Windenergieanlage weist der Generator eine Stator-Tragstruktur auf, wobei die Brems- und Arretiervorrichtung benachbart, und insbesondere beabstandet, zu der Stator-Tragstruktur angeordnet ist. Vorzugsweise ist die Brems- und Arretiervorrichtung in einem Raum zwischen der Rotornabe und der Stator-Tragstruktur angeordnet. Der Raum zwischen Rotornabe und Stator-Tragstruktur blieb insbesondere bei Windenergieanlagen, welche Generatoren mit Außenläufer aufweisen, bislang ungenutzt und ermöglicht daher vorteilhaft eine kompaktere Bauform.

Die Brems- und Arretiervorrichtung der Windenergieanlage der vorliegenden Erfindung wird vorteilhaft weitergebildet, indem der Bremskörper zumindest partiell keilförmig ausgebildet ist und mindestens eine Wirkfläche aufweist. Die Wirkfläche verläuft dann insbesondere schräg zu der Bewegungsrichtung des Bremskörpers, d.h. schließt mit der Bewegungsrichtung des Bremskörpers folglich einen Winkel α mit einem Betrag größer 0° und kleiner 180° ein. Bevorzugt liegt der Winkel in einem Bereich von 1° bis 30°, besonders bevorzugt in einem Bereich von 2° bis 15°.

Die Bewegungsrichtung des Bremskörpers ist vorzugweise parallel zur Rotationsachse der Rotornabe. Die Wirkfläche des keilförmig ausgebildeten Bremskörpers tritt in der Bremsposition in Kontakt mit der korrespondierenden Bremsfläche. Bremsen, welche Bremskörper mit keilförmiger Ausbildung aufweisen, sogenannte Keilbremsen, benötigen zum Bremsen einen geringeren Kraftaufwand beziehungsweise erzielen mit derselben Kraft eine größere Bremswirkung. Die erzeugte Bremskraft ist abhängig von dem Winkel α, welcher durch die Wirkfläche und die Bewegungsrichtung eingeschlossen wird.

Der Bremskörper der vorliegenden Erfindung wird vorteilhaft weitergebildet, indem er einen oder mehrere wechselbare Bremsbeläge auf der Wirkfläche aufweist. Der Reibkontakt zwischen der Bremsfläche und den Bremsbelägen führt zu einem erhöhten Verschleiß seitens der Bremsbeläge. Durch die Anordnung des Bremskörpers auf dem Achszapfen sind eine gute Erreichbarkeit des Bremskörpers und damit der einfache Wechsel der Bremsbeläge gewährleistet.

Erfindungsgemäß ist der Bremskörper zwischen dem Achszapfen und der Rotornabe angeordnet und greift mit der Wirkfläche an der Innenseite der Rotornabe an. In dieser Ausführungsform ist der Winkel zwischen der Wirkfläche und der Führungsfläche des Bremskörpers derart ausgebildet, dass der vorzugsweise keilförmige Bremskörper an dem Achszapfen entlang in eine Ausnehmung zwischen Rotornabe und Achszapfen gleiten kann und deren Bewegung durch Reibkontakt mit der Bremsfläche bremst.

In einer bevorzugten Weiterbildung der Erfindung weist die Rotornabe einen Vorsprung auf, welcher in Umfangsrichtung verläuft und sich in axialer Richtung erstreckt, oder alternativ eine Vertiefung auf, welche in Umfangsrichtung verläuft und sich in axialer Richtung erstreckt. Der Vorsprung oder die Vertiefung weisen dabei mindestens eine erste und eine zweite Bremsfläche zum Bremskörper auf. Besonders vorteilhaft ist die bzw. sind die Bremsflächen parallel zu der Ihnen jeweils zugeordneten Wirkfläche des mindestens einen korrespondierenden Bremskörpers ausgebildet.

In einer weiteren bevorzugten Weiterbildung ist der Bremskörper ein erster Bremskörper, und die Brems- und Arretiervorrichtung weist ferner mindestens einen weiteren Bremskörper auf, wobei der erste Bremskörper mit einer Wirkfläche an einer korrespondierenden ersten Bremsfläche angreift und der mindestens eine weitere Bremskörper mit jeweils einer Wirkfläche an einer korrespondierenden Bremsfläche, alternierend zum vorangegangenen Bremskörper, angreift. Die Bremskörper werden bevorzugt in dieselbe Bewegungsrichtung bewegt. Der Anteil der Bremskraft in radialer Richtung, welcher durch den Bremskörper auf die Bremsfläche der Nabe ausgeübt wird, gleicht sich auf diese Weise weitestgehend aus. Das alternierende Angreifen der ersten und zweiten Bremsfläche reduziert damit die in Umfangsrichtung nach außen wirkenden Kräfte, welche auf die Nabe wirken und reduziert damit die Gefahr einer Spreizung der Nabe. Unter alternierend wird hier das wechselseitige Angreifen der Wirkfläche mindestens eines ersten Bremskörpers an einer korrespondierenden ersten Bremsfläche, gefolgt von dem Angreifen der Wirkfläche mindestens eines weiteren Bremskörpers an einer korrespondierenden zweiten Bremsfläche verstanden. Die Wirkflächen des mindestens einen ersten Bremskörpers sind dabei alternierend zu den Wirkflächen des mindestens einen weiteren Bremskörpers in jeweils einem Winkel "+α" oder "-α" relativ zu der Bewegungsrichtung des Bremskörpers ausgerichtet.

In einer weiteren bevorzugten Ausführungsform der Erfindung greift der mindestens eine Bremskörper mit jeweils zwei Wirkflächen beidseitig an der ersten und zweiten Bremsfläche an. weist Der Anteil der Bremskraft in radialer Richtung, welche durch den Bremskörper auf die Bremsfläche der Nabe ausgeübt wird, gleicht sich auf diese Weise ebenfalls weitestgehend aus. Das beidseitige Angreifen der ersten und zweiten Bremsfläche reduziert die in Umfangsrichtung nach außen wirkenden Kräfte welche auf die Nabe wirken und reduziert damit die Gefahr der Spreizung der Nabe. Unter beidseitig wird hier also das Angreifen einer ersten und einer zweiten Wirkfläche mindestens eines Bremskörpers an zwei korrespondierenden Bremsflächen, welche vorzugsweise an einem Vorsprung oder einer Vertiefung ausgebildet sind, verstanden.

In einer besonders bevorzugten Weiterbildung der Erfindung ist der mindestens eine Bremskörper ganz oder teilweise ringförmig ausgebildet. Folglich ist mindestens ein Bremskörper entlang des Umfangs des Achszapfens angeordnet und bildet dabei entweder einen geschlossenen Ring oder mindestens ein Ringsegment. Insbesondere bei der Ausbildung des Bremskörpers als geschlossenen Ring entlang des Umfangs des Achszapfens, macht sich die Erfindung die Erkenntnis zu Nutze, dass auf diese Weise die Wirkfläche, welche zum Bremsen genutzt wird, maximiert und die Anzahl diskreter Aktuatoren, welche dazu eingerichtet sind die Bremskörper in Richtung der korrespondierenden Bremsfläche zu bewegen, reduziert werden kann.

Besonders bevorzugt weist der Aktuator einen hydraulischen oder pneumatischen oder einen elektromechanischen Antrieb auf, wobei der Aktuator vorzugsweise eine Wirkrichtung parallel zur Achse der Rotornabe aufweist. Die Wirkrichtung des Aktuators parallel zur Achse der Rotornabe bietet den Vorteil, dass die Kraftübertragung auf den Bremskörperdirekt erfolgt und somit auf Hilfselemente zur Umlenkung der Kräfte verzichtet werden kann. Dadurch wird eine Reduzierung des benötigten Bauraums und des Gewichts der Gondel möglich. Der direkte Antrieb des Bremskörpers bietet darüber hinaus, verglichen mit einem mechanischen Antrieb, den Vorteil einer kompakteren Bauform der Brems- und Arretiervorrichtung.

Vorzugsweise ist der Aktuator mit einer Steuerung verbunden, wobei die Steuerung dazu eingerichtet ist, einen Bremsbefehl zu empfangen, und bei Vorliegen eines Bremsbefehls den Aktuator derart anzusteuern, dass dieser den Bremskörper in die Bremsposition bewegt. Ferner ist die Steuerung dazu eingerichtet bei Vorliegen eines Anlagenstillstandes und des Arretierungsbefehls den Aktuator anzusteuern, dass dieser den Bremskörper in die Arretierungsposition bewegt. Außerdem ist die Steuerung dazu eingerichtet, bei Vorliegen eines Befehls zum Fortsetzen des Betriebs den Aktuator anzusteuern, dass dieser den Bremskörpers in die Ruheposition bewegt.

Besonders bevorzugt wird die Erfindung dadurch weitergebildet, dass am Achszapfen mindestens ein Führungsmittel ausgebildet ist, welches dazu eingerichtet ist die Bremskörper in axialer Richtung zu führen. Unter Führung des Bremskörpers in axialer Richtung wird verstanden, dass die Bewegung entlang der Rotationsachse der Rotornabe zugelassen wird und die Bewegung des Bremskörpers bezogen auf die Rotationsachse der Rotornabe in Umfangsrichtung verhindert wird. Die Führungsmittel sind beispielsweise als Bolzenführung oder Keilwellenverbindung ausgebildet. Die in Umfangsrichtung wirkenden Kräfte werden dabei durch das beschriebene Führungsmittel aufgenommen.

Die Erfindung wurde vorstehend in einem ersten Aspekt mit Bezug auf eine Windenergieanlage beschrieben. In einem weiteren Aspekt betrifft die Erfindung auch eine Standbaugruppe einer Windenergieanlage, insbesondere einer Windenergieanlage nach einer der vorstehend beschriebenen bevorzugten Ausführungsformen, mit einem Maschinenträger und einem Achszapfen zur Aufnahme und Lagerung einer Rotornabe und/oder zur Aufnahme eines Generatorstators, wobei der Achszapfen an dem Maschinenträger befestigt ist.

Die Erfindung löst die eingangs angegebene Aufgabe bei einer solchen Standbaugruppe, indem an der Standbaugruppe, insbesondere an dem Achszapfen, eine Brems- und Arretiervorrichtung befestigt ist. Die erfindungsgemäße Standbaugruppe macht sich dieselben Vorteile und bevorzugten Ausführungsformen zunutze die die Windenergieanlage gemäß dem ersten Aspekt, so dass zur Vermeidung von Wiederholungen auf die obigen Ausführungen verwiesen wird.

Die besonderen Vorteile der erfindungsgemäßen Brems- und Arretiervorrichtung zeigen sich auch in einem weiteren Aspekt in einem Verfahren zum Betrieb einer Windenergieanlage gemäß einer der vorstehend beschriebenen Ausführungsformen mit den Schritten: Betrieb der Windenergieanlage derart, dass eine Rotornabe rotiert, aerodynamisches Verzögern der Rotation der Rotornabe solange, bis eine vorbestimmte Drehgeschwindigkeit erreicht oder unterschritten wird, und anschließendes mechanisches Bremsen der Rotornabe mittels einer Brems- und Arretiervorrichtungsolange, bis die Rotornabe zum Stillstand gekommen ist. Weiter vorzugsweise folgt dann ein Schritt des Arretierens der Rotornabe. Erfindungsgemäß wird hierzu eine Brems- und Arretiervorrichtung nach einer der vorstehend beschriebenen bevorzugten Ausführungsformen an einer ebensolchen Windenergieanlage verwendet.

Bislang war es insbesondere bei getriebelosen Windenergieanlagen aufgrund der hohen bewegten Massen von Rotornabe und Generatorrotor nicht wirtschaftlich umsetzbar, eine mechanische Bremsung vorzunehmen. Mit den bereits vorbekannten reinen Arretiervorrichtungen war es nicht möglich, überhaupt die Rotornabe zu kontaktieren, bevor diese den Stillstand erreicht hatte. Die Erfindung setzt hier an und stellt eine Möglichkeit bereit, mit der sowohl eine mechanische Bremsung als auch eine Arretierung möglich sind, genauso wie eine reine Arretierung bei vorheriger rein aerodynamischer Bremsung.

Die Erfindung wird im Folgenden unter Bezugnahme auf die beigefügten Figuren anhand bevorzugter Ausführungsbeispiele näher beschrieben. Hierbei zeigen:
- Fig. 1:: eine Windenergieanlage schematisch in einer perspektivischen Ansicht,
- Fig. 2:: eine Gondel der Windenergieanlage gemäß Figur 1 schematisch in einer teilgeschnittenen Ansicht
- Fig. 3:: eine schematische Darstellung einer Brems- und Arretiervorrichtung für die Windenergieanlage gemäß Figuren 1 und 2 in einer ersten bevorzugten Ausführungsform
- Fig. 4:: einen Ausschnitt der Ansicht gemäß Figur 2
- Fig. 5:: eine schematische Darstellung einer zweiten bevorzugten Ausführungsform der Brems- und Arretiervorrichtung
- Fig. 6:: eine schematische Darstellung einer dritten bevorzugten Ausführungsform der Brems- und Arretiervorrichtung

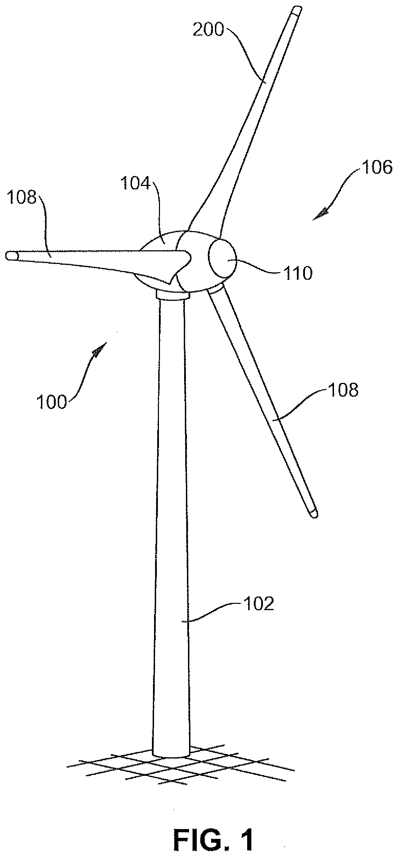

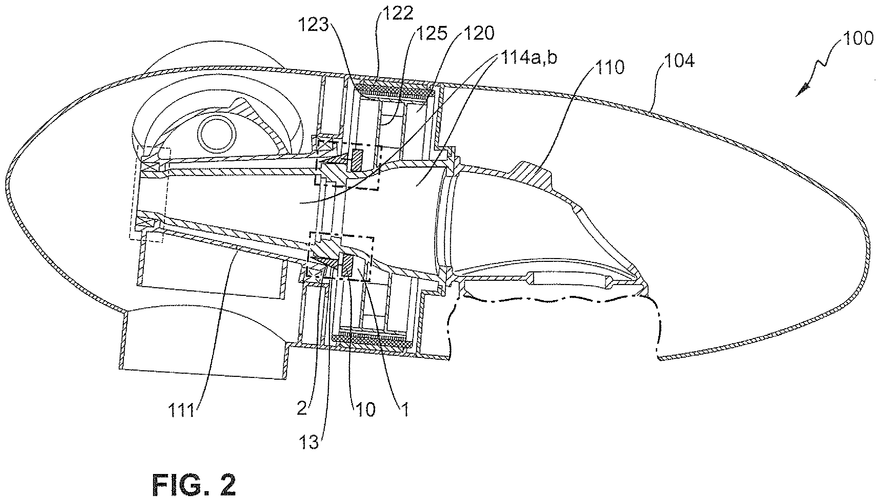

Figur 1 zeigt eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator 120 (Figur 2) in der Gondel 104 an.

Die Gondel 104 ist in Figur 2 in einer Schnittansicht gezeigt. In der Gondel 104 ist ein Maschinenträger 110 in allgemein bekannter Weise angeordnet, der einen Achszapfen 114a, b trägt. Die Rotornabe 111 ist auf dem Achszapfen 114a, b gelagert und mit den Rotorblättern 108 verbunden. Die Rotornabe 111 ist mit einem Generator 120 wirkverbunden.

Der Generator 120 weist einen Generatorstator 123 auf, der mittels des Achszapfens 114a, b an dem Maschinenträger 110 in der Gondel 104 befestigt ist. Der Generatorrotor 122 ist wirkverbunden mit der Rotornabe 111.

Weitere, durch die Erfindung nicht ausgeschlossene Ausgestaltungsmöglichkeiten sehen beispielsweise vor, den Generatorstator 123 unmittelbar an den Maschinenträger 110 oder ein entsprechendes Bauteil der Gondel 104 anzubinden oder einen einteiligen Achszapfen 114 vorzusehen.

Die Brems- und Arretiervorrichtung 1 weist einen Bremskörper 2, einen Aktuator 10 und ein, den Bremskörper 2 mit dem Aktuator 10 verbindendes, Verbindungselement 13 auf, und ist mit dem Achszapfen 114a, b verbunden. Erfindungsgemäß werden andere Anordnungen der Brems- und Arretiervorrichtung 1, welche mit jeder Komponente der Standbaugruppe verbunden werden kann, nicht ausgeschlossen. Die Brems- und Arretiervorrichtung 1 kann bei einem Generator 120 mit Außenläufer benachbart und beabstandet zu der Stator-Tragstruktur 125 angeordnet sein.

Die Bremsfläche 8 ist an der Rotornabe 111 entsprechend der Gestaltung mindestens eines korrespondierenden Bremskörpers 2 der Brems- und Arretiervorrichtung 1 ausgebildet.

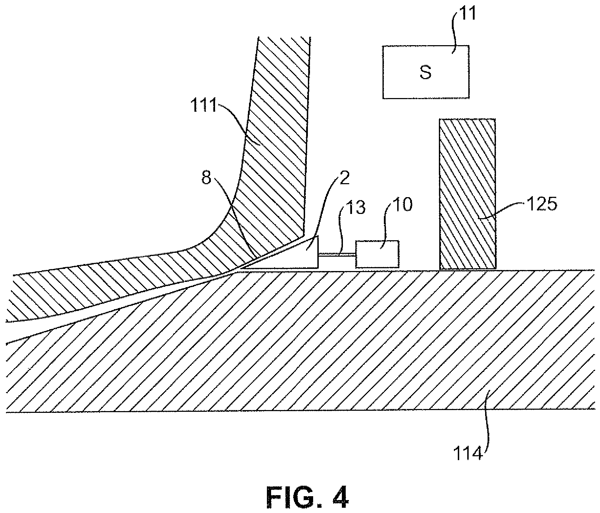

Der Bremskörper 2 ist dabei vorzugsweise ringsegmentförmig oder ringförmig ausgebildet. Eine vollständige, geschlossene, Ringform ist insbesondere bei einer Ausführung wie gemäß Figur 4 vorteilhaft. Insbesondere, wenn beabsichtigt ist, die Windenergieanlage teilweise aerodynamisch zu bremsen, und lediglich ab Erreichen bzw. Unterschreiten einer vorbestimmten Grenzgeschwindigkeit mechanisch zu bremsen, ist es ausreichend, vor allem bei den Ausführungsformen der Figuren 2-3 und 5-6., ringsegmentförmige Bremskörper vorzusehen, die jeweils nur so weit in Umfangsrichtung ausgebildet sind, wie "Bremsweg" benötigt wird. Die Grenzgeschwindigkeit, ab welcher mechanisch gebremst werden kann bzw. wollte, ist vorzugsweise auf die Erstreckung der segmentartigen Bremskörper in Umfangsrichtung abgestimmt. Bei niedrigen Geschwindigkeiten genügen bereits Segmente, die sich nur über wenige Winkelgrade, beispielsweise in einem Bereich von 1° bis 10°, in Umfangsrichtung erstrecken.

Der Bremskörper 2 umschließt, wie in Figur 2 angedeutet, den Achszapfen 114 a, b entweder vollständig und bildet einen Ring aus, welcher auf dem Achszapfen 114 a, b gelagert ist oder umschließt den Achszapfen 114 a, b zumindest in Teilen in Form eines Ringsegments. Dabei ist der Bremskörper 2, welcher einen Ring oder ein Ringsegment ausbildet in axialer Richtung mittels mindestens eines Aktuators 10 bewegbar, wobei der Aktuator 10 ebenfalls auf dem Achszapfen 114 a, b gelagert ist.

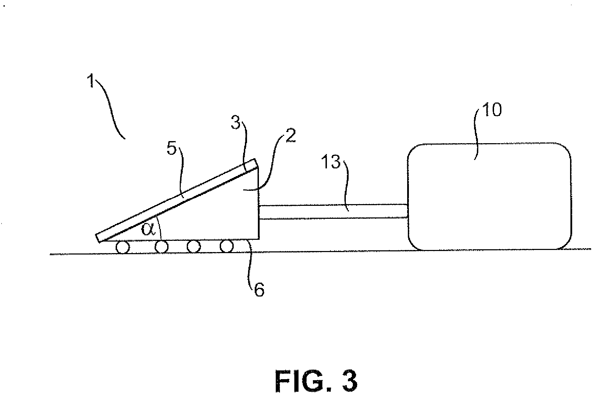

Eine erste bevorzugte Ausgestaltung der Brems- und Arretiervorrichtung 1 gemäß Figur 2 ist Figur 3 zu entnehmen. Die Brems- und Arretiervorrichtung 1 ist benachbart und beabstandet zu der Stator-Tragstruktur 125 angeordnet. Der Aktuator 10 ist mit dem Achszapfen 114 verbunden und dazu eingerichtet den Bremskörper 2, welcher mit einem Verbindungsmittel 13 mit dem Aktuator 10 verbunden ist, in axialer Richtung zu bewegen. Der Bremskörper 2 ist dabei zwischen dem Achszapfen 114a, b und der Rotornabe 111 angeordnet. Die Steuerung 11 ist dazu eingerichtet den Aktuator 10 zu steuern.

Der Querschnitt des Bremskörpers 2 ist gemäß einer ersten bevorzugten Ausführungsform als Keil ausgebildet und weist eine im Wesentlichen schräg zu der Rotationsachse der Rotornabe 111 verlaufende Wirkfläche 3 auf, welche mit der Führungsfläche 8 des Bremskörpers einen Winkel α einschließt und einen Bremsbelag 5 aufweist.

Die Brems- und Arretiervorrichtung 1 gemäß Figur 4 weist einen Bremskörper 2 auf. Der Bremskörper 2 ist mittels eines Verbindungsmittels 13 mit einem Aktuator 10 wirkverbunden. Der Aktuator 10 wird dabei von einer Steuerung 11 angesteuert.

Der Bremskörper 2 weist eine Wirkfläche 3 auf, auf welche mindestens ein Bremsbelag 5 aufgebracht ist. Des Weiteren weist der Bremskörper 2 eine Führungsfläche 6 auf, welche mit der Wirkfläche 3 den Keilwinkel α einschließt.

Der Aktuator 10 übt auf den Bremskörper 2 eine Kraft, insbesondere eine Brems- oder Arretierungskraft aus, die auf Bremsfläche 8 wirkt und deren Betrag abhängig von dem Keilwinkels α ist.

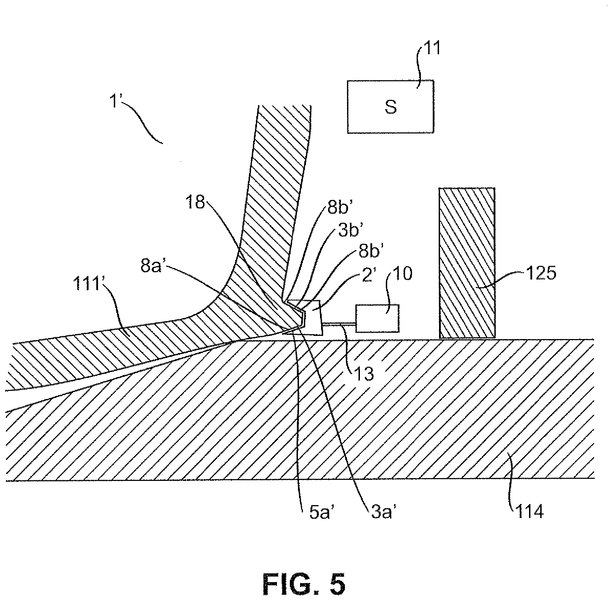

Figur 5 zeigt eine alternative Ausgestaltung der erfindungsgemäßen Brems- und Arretiervorrichtung 1'. Die Brems- und Arretiervorrichtung 1' ist benachbart und beabstandet zu der Stator-Tragstruktur 125 angeordnet. Entsprechend der Anordnung gemäß Figur 4, ist der Aktuator 10 mit dem Achszapfen 114 in bekannter Weise verbunden und dazu eingerichtet den Bremskörper 2' in axialer Richtung zu bewegen. Die Steuerung 11 ist dazu eingerichtet den Aktuator 10 zu steuern.

Die Rotornabe 111" weist dabei einen Vorsprung 18, welcher sich in radialer Richtung erstreckt und in Umfangsrichtung verläuft, auf. An dem Vorsprung 18 sind eine Bremsfläche 8`a und eine zweite Bremsfläche 8`b ausgebildet, welche mit einer korrespondierenden ersten Wirkfläche 3`a und zweiten Wirkfläche 3`b des Bremskörpers 2' in Reibkontakt treten. Die erste Wirkfläche 3`a und die zweite Wirkfläche 3`b weisen dabei jeweils mindestens einen Bremsbelag 5`a und 5`b auf. Die Fläche des Bremskörpers 2`, welche zum Achszapfen 114 orientiert ist, bildet die Führungsfläche 6' aus.

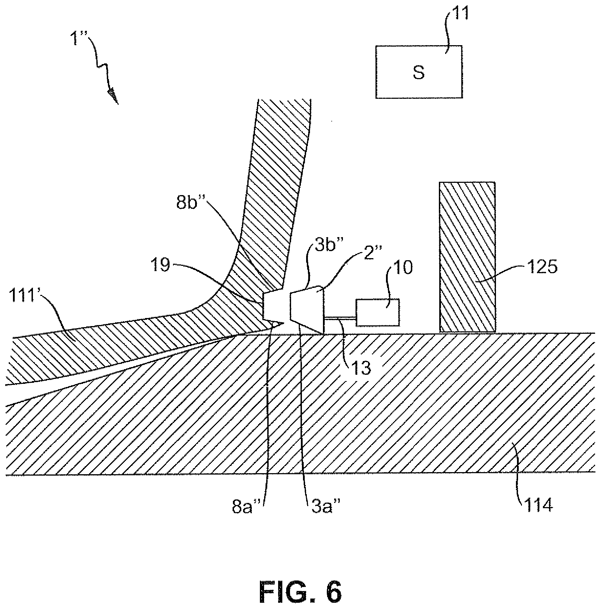

Figur 6 zeigt eine weitere alternative Ausgestaltung der Brems- und Arretiervorrichtung 1". Die Brems- und Arretiervorrichtung 1 ist benachbart und beabstandet zu der Stator-Tragstruktur 125 angeordnet. Entsprechend der Anordnung der vorangegangenen Figuren 4 und 5 ist der Aktuator 10 mit dem Achszapfen 114 in bekannter Weise verbunden und dazu eingerichtet den Bremskörper 2" in Richtung der korrespondierenden Bremsfläche 8" der Rotornabe 111" zu bewegen. Die Steuerung 11 ist dazu eingerichtet, den Aktuator 10 in bekannter Weise zu steuern.

Die Rotornabe 111" weist dabei eine Vertiefung 19, welche sich in radialer Richtung erstreckt und in Umfangsrichtung verläuft, auf. An der Vertiefung 19 sind eine Bremsfläche 8"a und eine zweite Bremsfläche 8"b ausgebildet, welche mit einer korrespondierenden ersten Wirkfläche 3"a und zweiten Wirkfläche 3"b des Bremskörpers 2" in Reibkontakt treten. Die erste Wirkfläche 3"a und die zweite Wirkfläche 3"b weisen dabei jeweils mindestens einen Bremsbelag 5"a und 5"b auf. Die Fläche des Bremskörpers 2", welche zum Achszapfen 114 orientiert ist, bildet erneut die Führungsfläche 6" aus.

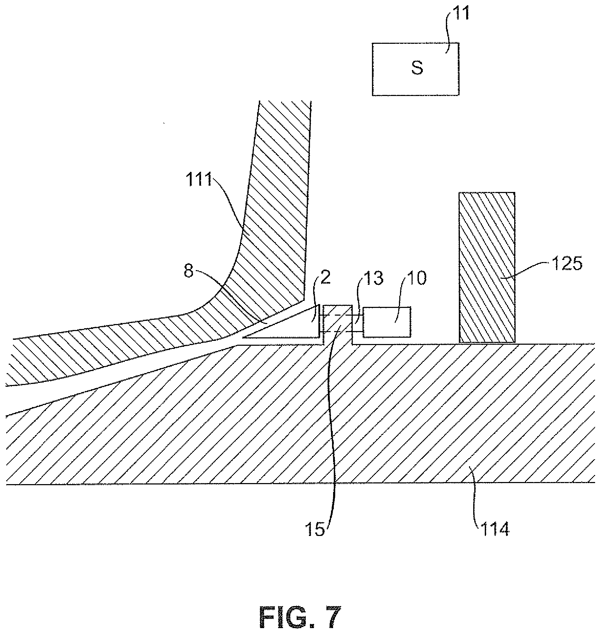

Figur 7 zeigt eine bevorzugte Weiterentwicklung der Brems-und Arretiervorrichtung 1. Die Brems-und Arretiervorrichtung 1 ist benachbart und beabstandet zu der Stator-Tragstruktur 125 angeordnet. Entsprechend der Anordnung der vorangegangenen Figuren 4-6 ist der Aktuator 10 mit dem Achszapfen 114 verbunden und dazu eingerichtet den Bremskörper 2 in Richtung der korrespondierenden Bremsfläche 8 der Rotor Nabe 111 zu bewegen. Die Steuerung 11 ist dazu eingerichtet, den Aktuator 10 in oben beschriebener Weise zu steuern.

Auf dem Achszapfen 114 sind dabei Bolzenführungen 15 ausgebildet, welche dazu eingerichtet sind, den Bremskörper 2, welcher durch ein Verbindungsmittel 13 mit dem Aktuator 10 verbunden ist, in axialer Richtung zu führen und vor allem in Umfangsrichtung wirkende Kräfte aufzunehmen.

Während in den Figuren 1 bis 6 gezeigte Ausgestaltungen explizit auf einen Generator 120 mit Außenläufer abstellt, so soll verstanden werden, dass erfindungsgemäß jedenfalls auch Generatoren 120 mit Innenläufer umfasst sind, bei denen ein Generatorrotor 123 wirkverbunden mit einer Rotornabe 111 ist, wobei die Rotornabe 114 mit den Rotorblättern 108 verbunden ist, und bei denen gleiche Grundsätze greifen, wie vorstehend unter Bezugnahme auf den Außenläufer beschrieben.

Vorstehend wurden bevorzugte Ausführungsformen in Bezug auf Windenergieanlagen im Allgemeinen beschrieben. Die Erfindung betrifft insbesondere eine getriebelose Windenergieanlage.

Ferner betrifft die Erfindung bevorzugt eine Windenergieanlage, welche einen Synchrongenerator und weiter vorzugsweise einen Synchron-Ringgenerator aufweist. Besonders bevorzugt weist die erfindungsgemäße Windenergieanlage einen vielpoligen Synchron-Ringgenerator auf. Ein solcher vielpoliger Synchron-Ringgenerator einer getriebelosen Windenergieanlage weist eine Vielzahl von Statorpolen auf, insbesondere wenigstens 48 Statorzähne, häufig sogar deutlich mehr Statorzähne wie insbesondere 96 Statorzähne oder noch mehr Statorzähne. Windenergieanlagen mit Synchron-Ringgenerator weisen weiter vorzugsweise einen großen Luftspaltdurchmesser auf.

Die Windenergieanlage hat vorzugsweise einen magnetisch aktiven Bereich des Generators, nämlich sowohl des Rotors als auch des Stators, der in einem ringförmigen Bereich um die Drehachse des Synchrongenerators angeordnet ist. Je nach Aufbau der erfindungsgemäßen Windenergieanlage kann eine Tragstruktur in dem inneren Bereich vorhanden sein, die aber in einigen Ausführungen axial versetzt ausgebildet sein kann.

Der Generator ist vorzugsweise fremderregt.

In einer bevorzugten Ausführungsform ist der Generator ein langsam drehender Generator. Hiermit wird ein Generator mit einer Drehzahl von 100 Umdrehungen pro Minute oder weniger, vorzugsweise 50 Umdrehungen pro Minute oder weniger, besonders bevorzugt in einem Bereich von 5 bis 35 Umdrehungen pro Minute verstanden.

## Patentansprüche

1. Windenergieanlage (100) mit einer Standbaugruppe, welche einen Maschinenträger (110) vorzugsweise einen mit dem Maschinenträger (110) verbundenen Achszapfen (114), eine Rotornabe (111), welche drehbar an der Standbaugruppe gelagert ist, einen Generator (120), welcher mit der Rotornabe (111) wirkverbunden ist, und eine Brems-und Arretiervorrichtung (1) aufweist, wobei die Brems- und Arretiervorrichtung (1) mindestens einen Bremskörper (2) und mindestens einen Aktuator (10) aufweist, welcher dazu eingerichtet ist den Bremskörper (2) relativ zu einer Bremsfläche (8) hin und her zu bewegen, wobei die Brems- und Arretiervorrichtung (1) an der Standbaugruppe, insbesondere an dem Achszapfen (114) befestigt ist; und die Bremsfläche (8) an der Rotornabe (111) ausgebildet ist,
**dadurch gekennzeichnet, dass** der Bremskörper (2) zwischen dem Achszapfen (114) und der Rotornabe (111) angeordnet ist und mit einer Wirkfläche (3) an der Innenseite der Rotornabe (111) angreift,
wobei der Bremskörper (2) eine dem Achszapfen (114) zugewandte Führungsfläche aufweist und auf dem Achszapfen (114) bewegbar gelagert ist

2. Windenergieanlage (100) nach Anspruch 1,
**dadurch gekennzeichnet, dass** der Generator (120) eine Stator-Tragstruktur (125) aufweist, wobei die Brems- und Arretiervorrichtung (1) benachbart, und insbesondere beabstandet, zu der Stator-Tragstruktur (125) angeordnet ist.

3. Windenergieanlage (100) nach einem der vorstehenden Ansprüche,
**dadurch gekennzeichnet, dass** der Bremskörper (2) zumindest partiell keilförmig ist und mindestens eine Wirkfläche (3) aufweist.

4. Windenergieanlage (100) nach einem der vorstehenden Ansprüche,
**dadurch gekennzeichnet, dass** der Bremskörper (2) einen oder mehrere wechselbare Bremsbeläge (5) auf der Wirkfläche (3) aufweist.

5. Windenergieanlage (100) nach einem der vorstehenden Ansprüche,
**dadurch gekennzeichnet, dass** die Rotornabe (111'/111") einen in Umfangsrichtung verlaufenden, sich in axialer Richtung erstreckenden Vorsprung (18) oder eine in Umfangsrichtung verlaufende, sich in axialer Richtung ersteckende Vertiefung (19) aufweist, welche eine erste und eine zweite Bremsfläche (8a', b'/ 8a', b") zum Bremskörper (272") aufweisen.

6. Windenergieanlage (100) nach einem der vorstehenden Ansprüche,
**dadurch gekennzeichnet, dass** der Bremskörper (2) ein erster Bremskörper ist, und die Brems- und Arretiervorrichtung (1, 1', 1") ferner mindestens einen weiteren Bremskörper aufweist,
wobei der erste Bremskörper (2) mit einer Wirkfläche an einer korrespondierenden ersten Bremsfläche (8) angreift und der mindestens eine weitere Bremskörper mit jeweils einer Wirkfläche an einer korrespondierenden Bremsfläche, alternierend zum vorangegangenen Bremskörper, angreift.

7. Windenergieanlage (100) nach einem der Ansprüche 1 bis 6,
**dadurch gekennzeichnet, dass** mindestens ein Bremskörper (272") mit jeweils zwei Wirkflächen (3a', b'/ 3a", b") beidseitig an der ersten und zweiten Bremsfläche (8a', b'/ 8a", b") angreift.

8. Windenergieanlage (100) nach einem der vorstehenden Ansprüche,
**dadurch gekennzeichnet, dass** der mindestens eine Bremskörper (2) ganz oder teilweise ringförmig ausgebildet ist.

9. Windenergieanlage (100) nach einem der vorstehenden Ansprüche,
**dadurch gekennzeichnet, dass** der Aktuator (10) einen hydraulischen oder pneumatischen oder einen elektromechanischen Antrieb aufweist, wobei der Aktuator (10) vorzugsweise eine Wirkrichtung parallel zur Achse der Rotornabe (111) aufweist.

10. Windenergieanlage (100) nach einem der vorstehenden Ansprüche, **gekennzeichnet durch** eine Steuerung (11), welche mit dem Aktuator (10) verbunden ist, wobei die Steuerung (11) dazu eingerichtet ist,
- bei Vorliegen eines Bremsbefehls den Aktuator (10) anzusteuern, damit dieser den Bremskörper (2) in eine Bremsposition bewegt, in welcher Reibkontakt zwischen dem Bremskörper (2) und der Bremsfläche (8) besteht, und mit einer Bremskraft zu beaufschlagen,
- bei Vorliegen eines Anlagenstillstandes und eines Arretierungsbefehls, den Aktuator (10) anzusteuern, damit dieser den Bremskörper (2) in die Arretierungsposition bewegt, in welcher Reibkontakt zwischen dem Bremskörper (2) und der Bremsfläche (8) besteht, und den Bremskörper (2) mit einer Arretierungskraft zu beaufschlagen, und
- bei Erhalt eines Befehls zum Fortsetzen des Betriebs ein Signal zum Bewegen des Bremskörpers (2) in die Ruheposition an den Aktuator (10) zu senden.

11. Windenergieanlage (100) nach einem der vorstehenden Ansprüche, **gekennzeichnet dadurch, dass** am Achszapfen (114) ein Führungsmittel ausgebildet ist, welches dazu eingerichtet ist, die Bremskörper (2) in axialer Richtung zu führen.

12. Standbaugruppe einer Windenergieanlage (100) nach einem der vorstehenden Ansprüche, mit
einem Maschinenträger (110), und einem Achszapfen (114) zur Aufnahme und Lagerung einer Rotornabe und/oder zur Aufnahme eines Generatorstators, wobei der Achszapfen (114) an dem Maschinenträger befestigt ist,
**dadurch gekennzeichnet, dass** an der Standbaugruppe, insbesondere an dem Achszapfen (114), eine Brems- und Arretiervorrichtung (1) befestigt ist, wobei die Brems- und Arretiervorrichtung (1) mindestens einen Bremskörper (2) und mindestens einen Aktuator (10) aufweist, welcher dazu eingerichtet ist den Bremskörper (2) relativ zu einer Bremsfläche (8) an der Rotornabe (111) hin und her zu bewegen, und dazu eingerichtet ist, an einer Wirkfläche (3) an der Innenseite der Rotornabe (111) anzugreifen,
wobei der Bremskörper (2) eine dem Achszapfen (114) zugewandte Führungsfläche aufweist und auf dem Achszapfen (114) bewegbar gelagert ist.

13. Verfahren zum Betrieb einer Windenergieanlage (100) nach einem der Ansprüche 1 bis 11, umfassend die Schritte:
Betrieb der Windenergieanlage (100) derart, dass eine Rotornabe (111) rotiert,
aerodynamisches Verzögern der Rotation der Rotornabe (111) solange, bis eine vorbestimmte Drehgeschwindigkeit erreicht oder unterschritten wird, und
anschließendes mechanisches Bremsen der Rotornabe (111) mittels einer Brems- und Arretiervorrichtung (1) solange, bis die Rotornabe (111) zum Stillstand gekommen ist.

14. Verfahren nach Anspruch 13, weiter umfassend den Schritt:
Arretieren der Rotornabe (111) mittels der Brems- und Arretiervorrichtung (1) nach Erreichen des Stillstands.

## Claims

1. A wind turbine (100) with a base assembly which has a machine carrier (110), preferably an axle journal (114) connected to the machine carrier (110), a rotor hub (111) which is rotatably mounted on the base assembly, a generator (120) which is operatively connected to the rotor hub (111), and a braking and locking device (1), wherein the braking and locking device (1) has at least one brake body (2) and at least one actuator (10) which is designed to move the brake body (2) back and forth relative to a braking surface (8), wherein the braking and locking device (1) is fastened to the base assembly, in particular to the axle journal (114); and the braking surface (8) is formed on the rotor hub (111),
**characterized in that** the brake body (2) is arranged between the axle journal (114) and the rotor hub (111) and engages with an effective surface (3) on the inside of the rotor hub (111),
wherein the brake body (2) has a guide surface which faces toward the axle journal (114) and is movably mounted on the axle journal (114)

2. The wind turbine (100) according to claim 1,
**characterized in that** the generator (120) has a stator support structure (125), wherein the braking and locking device (1) is arranged adjacent to, and in particular at a distance from, the stator support structure (125).

3. The wind turbine (100) according to any one of the preceding claims,
**characterized in that** the brake body (2) is at least partially wedge-shaped and has at least one effective surface (3).

4. The wind turbine (100) according to any one of the preceding claims,
**characterized in that** the brake body (2) has one or more replaceable brake pads (5) on the effective surface (3).

5. The wind turbine (100) according to any one of the preceding claims,
**characterized in that** the rotor hub (111/111) has a projection (18) running in the circumferential direction and extending in the axial direction or a recess (19) running in the circumferential direction and extending in the axial direction, which have a first and a second braking surface (8a', b'/ 8a', b") toward the brake body (272").

6. The wind turbine (100) according to any one of the preceding claims,
**characterized in that** the brake body (2) is a first brake body, and the braking and locking device (1, 1', 1") further comprises at least one additional brake body,
wherein the first brake body (2) engages an effective surface on a corresponding first brake surface (8) and the at least one additional brake body engages an effective surface on a corresponding brake surface, alternating with the preceding brake body.

7. The wind turbine (100) according to any one of claims 1 to 6,
**characterized in that** at least one brake body (2'/2") with two effective surfaces (3a', b'/3a", b") acts on both sides on the first and second brake surface (8a', b'/8a", b").

8. The wind turbine (100) according to any one of the preceding claims,
**characterized in that** the at least one brake body (2) is completely or partially annular.

9. The wind turbine (100) according to any one of the preceding claims,
**characterized in that** the actuator (10) has a hydraulic or pneumatic or electromechanical drive, wherein the actuator (10) preferably has an effective direction parallel to the axis of the rotor hub (111).

10. The wind turbine (100) according to any one of the preceding claims, **characterized by** a controller (11) which is connected to the actuator (10), wherein the controller (11) is designed to control,
- when a braking command is present, the actuator (10) so that it moves the brake body (2) into a braking position in which there is frictional contact between the brake body (2) and the braking surface (8), and to apply a braking force,
- when the system is at a standstill and a locking command is issued, the actuator (10) so that it moves the brake body (2) into the locking position in which there is frictional contact between the brake body (2) and the braking surface (8), and to apply a locking force to the brake body (2), and
- upon receipt of a command to continue operation, to send a signal to the actuator (10) to move the brake body (2) to the resting position.

11. The wind turbine (100) according to any one of the preceding claims,
**characterized in that** a guide means is formed on the axle journal (114) which is designed to guide the brake bodies (2) in the axial direction.

12. A base assembly of a wind turbine (100) according to any one of the preceding claims, with a machine support (110) and an axle journal (114) for receiving and supporting a rotor hub and/or for receiving a generator stator, wherein the axle journal (114) is attached to the machine support,
**characterized in that** a braking and locking device (1) is attached to the base assembly, in particular to the axle journal (114), wherein the braking and locking device (1) has at least one brake body (2) and at least one actuator (10) which is designed to move the brake body (2) back and forth relative to a braking surface (8) on the rotor hub (111) and is designed to engage an effective surface (3) on the inside of the rotor hub (111),
wherein the brake body (2) has a guide surface which faces toward the axle journal (114) and is movably mounted on the axle journal (114).

13. A method for operating a wind turbine (100) according to any one of claims 1 to 11, comprising the steps:
operating the wind turbine (100) such that a rotor hub (111) rotates, aerodynamically decelerating the rotation of the rotor hub (111) until a predetermined rotational speed is reached or exceeded, and
subsequent mechanical braking of the rotor hub (111) by means of a braking and locking device (1) until the rotor hub (111) has come to a standstill.

14. The method according to claim 13, further comprising the step:
locking the rotor hub (111) by means of the braking and locking device (1) after reaching a standstill.

## Revendications

1. Eolienne (100) avec un bloc de support, lequel présente un support de machine (110) de préférence un tourillon (114) relié au support de machine (110), un moyeu de rotor (111), lequel est monté de manière rotative sur le bloc de support, un générateur (120), lequel est en liaison fonctionnelle avec le moyeu de rotor (111), et un dispositif de freinage et d'arrêt (1), dans laquelle le dispositif de freinage et d'arrêt (1) présente au moins un corps de freinage (2) et au moins un actionneur (10), lequel est conçu pour déplacer en va-et-vient le corps de freinage (2) par rapport à une surface de freinage (8), dans laquelle le dispositif de freinage et d'arrêt (1) est fixé sur le bloc de support, en particulier sur le tourillon (114) ; et la surface de freinage (8) est réalisée sur le moyeu de rotor (111),
**caractérisée en ce que** le corps de freinage (2) est disposé entre le tourillon (114) et le moyeu de rotor (111) et agit avec une surface active (3) sur la face intérieure du moyeu de rotor (111),
dans laquelle le corps de freinage (2) présente une surface de guidage tournée vers le tourillon (114) et est monté de manière mobile sur le tourillon (114).

2. Eolienne (100) selon la revendication 1,
**caractérisée en ce que** le générateur (120) présente une structure porteuse de stator (125), dans laquelle le dispositif de freinage et d'arrêt (1) est disposé au voisinage, et en particulier de manière espacée, de la structure porteuse de stator (125).

3. Eolienne (100) selon l'une quelconque des revendications précédentes,
**caractérisée en ce que** le corps de freinage (2) est au moins en partie cunéiforme et présente au moins une surface active (3).

4. Eolienne (100) selon l'une quelconque des revendications précédentes,
**caractérisée en ce que** le corps de freinage (2) présente une ou plusieurs garnitures de frein (5) interchangeables sur la surface active (3).

5. Eolienne (100) selon l'une quelconque des revendications précédentes,
**caractérisée en ce que** le moyeu de rotor (111'/111") présente une partie saillante (18) allant dans la direction périphérique, s'étendant dans la direction axiale ou un évidement (19) allant dans la direction périphérique, s'étendant dans la direction axiale, lesquels présentent une première et une deuxième surface de freinage (8a', b'/8a', b") par rapport au corps de freinage (2'/2").

6. Eolienne (100) selon l'une quelconque des revendications précédentes,
**caractérisée en ce que** le corps de freinage (2) est un premier corps de freinage, et le dispositif de freinage et d'arrêt (1, 1', 1") présente en outre au moins un autre corps de freinage,
dans laquelle le premier corps de freinage (2) agit avec une surface active sur une première surface de freinage (8) correspondante et l'au moins un autre corps de freinage agit avec respectivement une surface active sur une surface de freinage correspondante, en alternance avec le corps de freinage précédent.

7. Eolienne (100) selon l'une quelconque des revendications 1 à 6,
**caractérisée en ce qu'**au moins un corps de freinage (2'/2") agit avec respectivement deux surfaces actives (3a', b'/ 3a", b") des deux côtés sur la première et deuxième surface de freinage (8a', b'/ 8a", b").

8. Eolienne (100) selon l'une quelconque des revendications précédentes,
**caractérisée en ce que** l'au moins un corps de freinage (2) est réalisé entièrement ou partiellement de manière annulaire.

9. Eolienne (100) selon l'une quelconque des revendications précédentes,
**caractérisée en ce que** l'actionneur (10) présente un entraînement hydraulique ou pneumatique ou un électromécanique, dans laquelle l'actionneur (10) présente de préférence une direction d'action parallèle à l'axe du moyeu de rotor (111).

10. Eolienne (100) selon l'une quelconque des revendications précédentes,
**caractérisée par** une commande (11), laquelle est reliée à l'actionneur (10), dans laquelle la commande (11) est conçue pour
- en présence d'une instruction de freinage, commander l'actionneur (10), afin que celui-ci déplace le corps de freinage (2) dans une position de freinage, dans laquelle un contact de friction existe entre le corps de freinage (2) et la surface de freinage (8), et le solliciter avec une force de freinage,
- en présence d'une immobilisation de l'installation et d'une instruction d'arrêt, commander l'actionneur (10), afin que celui-ci déplace le corps de freinage (2) dans la position d'arrêt, dans laquelle un contact de friction existe entre le corps de freinage (2) et la surface de freinage (8), et solliciter le corps de freinage (2) avec une force d'arrêt, et
- à la réception d'une instruction de poursuivre le fonctionnement envoyer un signal à l'actionneur (10) pour déplacer le corps de freinage (2) dans la position de repos.

11. Eolienne (100) selon l'une quelconque des revendications précédentes,
**caractérisée en ce qu'**un moyen de guidage, lequel est conçu pour guider le corps de freinage (2) dans la direction axiale, est réalisé sur le tourillon (114).

12. Bloc de support d'une éolienne (100) selon l'une quelconque des revendications précédentes, avec
un support de machine (110), et un tourillon (114) pour la réception et le montage d'un moyeu de rotor et/ou pour la réception d'un stator de générateur, dans lequel le tourillon (114) est fixé sur le support de machine,
**caractérisé en ce qu'**un dispositif de freinage et d'arrêt (1) est fixé sur le bloc de support, en particulier sur le tourillon (114), dans lequel le dispositif de freinage et d'arrêt (1) présente au moins un corps de freinage (2) et au moins un actionneur (10), lequel est conçu pour déplacer en va-et-vient le corps de freinage (2) par rapport à une surface de freinage (8) sur le moyeu de rotor (111), et est conçu pour agir sur une surface active (3) sur la face intérieure du moyeu de rotor (111),
dans lequel le corps de freinage (2) présente une surface de guidage tournée vers le tourillon (114) et est monté mobile sur le tourillon (114).

13. Procédé pour faire fonctionner une éolienne (100) selon l'une quelconque des revendications 1 à 11, comprenant les étapes :
de fonctionnement de l'éolienne (100), de telle sorte qu'un moyeu de rotor (111) tourne,
de ralentissement aérodynamique de la rotation du moyeu de rotor (111) jusqu'à ce qu'une vitesse de rotation prédéfinie soit atteinte ou ne soit pas atteinte, et
ensuite de freinage mécanique du moyeu de rotor (111) au moyen d'un dispositif de freinage et d'arrêt (1), jusqu'à ce que le moyeu de rotor (111) soit immobilisé.

14. Procédé selon la revendication 13, comprenant en outre l'étape :
d'arrêt du moyeu de rotor (111) au moyen du dispositif de freinage et d'arrêt (1) après atteinte de l'immobilisation.
